# EUROPEAN PATENT SPECIFICATION

(11) **EP 2 165 899 B1**
(45) Date of publication and mention of the grant of the patent: **11.11.2015**
(21) Application number: 09170768.7
(22) Date of filing: 18.09.2009
(51) Int. Cl.: B60T 13/04, B60T 13/74, B60T 17/08, F16D 65/14

(54) **A parking brake mechanism**
Feststellbremsenmechanismus
Mécanisme de frein à main

(30) Priority: 19.09.2008 GB 0817230
(43) Date of publication of application: 24.03.2010
(73) Proprietor: Meritor Heavy Vehicle Braking Systems (UK) Limited, Cwmbran, Gwent NP44 3XU (GB)
(72) Inventor: Jackson, Jonathan, Ross-on-Wye, HR9 6EA (GB); Wilde, Brendan, Thornbury (GB); Taylor, Martin, Torfaen, NP44 3ND (GB); Leiter, Ralf, 56743, Mendig (DE); Roberts, Paul, Newport, NP20 5QU (GB); Shaw, Gareth, Stourport on Severn, Worcestershire DY13 (GB); Thompson, Richard, Monmouth, NP25 3SH (GB); Bell, Paul, Rossett, LL12 0EL (GB); Fieldhouse, John, Almondbury, HD5 8US (GB); Knox, Gareth, Splott, CF24 3LQ (GB); El Malki, Refaat, Clifton, Bristol BS8 4HA (GB)
(74) Representative: Foot, Paul Matthew James

(56) References cited:
- EP-A1- 1 930 220
- WO-A1-99/48738
- WO-A1-2004/005099
- DE-A1- 10 352 030
- US-A1- 2008 217 117

## Description

The present invention relates to a parking brake mechanism. More particularly, the present invention relates to an electrically actuated parking brake mechanism for disc brakes or drum brakes having an air actuated service brake.

Various proposals have been put forward for utilising an electric motor to apply parking brakes, both on light passenger vehicles utilising hydraulic brake systems and heavy commercial vehicles that use air actuated service brakes.

Electric parking brakes have gone into commercial production for certain models of passenger cars, in which they essentially replace a cable linkage between a handbrake lever located in the passenger compartment and a disc or drum brake mounted in proximity to the rear wheels of a vehicle.

By contrast, despite various proposals being put forward for heavy vehicle brakes that are intended to replace a conventional spring brake on commercial vehicles, to the knowledge of the applicants, no electric parking brake has yet entered volume production for commercial vehicles. Conventional parking brake cylinders comprise a spring acting in a brake-on direction connected to a piston and push rod that is normally held in a parking brake-off position by pressurised air, but in which the air is vented to apply the parking brake. One disadvantage of spring parking brakes is their size. A second disadvantage is their inability to finely control the parking brake clamp force that they apply. Additionally, a failure in the air supply may cause the parking brake cylinders to become applied with no way for this to be controlled by the driver.

A number of hurdles need to be overcome to provide a practical electric parking brake that is specific to commercial vehicles. It is believed these have prevented adoption of this technology to date. One problem is that disc brakes used on commercial vehicles have significantly thicker discs and pads compared to light passenger vehicles, to enable the brakes to have a suitably long service life despite the increased energy that is dissipated during braking due to their increased vehicle weight. As a result, when a heavy commercial vehicle is parked when the brakes are hot, an appreciable shrinkage of those brake components, in particular the brake disc and brake pads, will occur. If this is not accounted for in some way by the parking brake mechanism, the clamp load applied by the parking brake will reduce as the brake components cool and contract and there is a reduced clamp load exerted by the pads on the brake disc that may cause the vehicle to roll away.

If used in conjunction with a drum brake on the other hand, the drum may contract as it cools and the reduction the drum diameter may damage components within the brake due to a lack of the compliance of such mechanisms

Such a problem does not arise with conventional spring parking brake cylinders since the spring can extend by a certain amount with only a slight drop in clamp load.

However, parking brakes such as those disclosed in US6851761 (Knorr-Bremse) that are electrically powered are not provided with a similar resilient, extensible component, and it is therefore necessary either to apply an initial excess parking brake force to account for this shrinkage or to re-apply the parking brake once a certain amount of time has lapsed to bring the clamp load back up to the amount required. Neither of these solutions is particularly satisfactory, since in the former case an excess stress is placed on the brake components that may shorten their life and in the latter scenario, there is a danger that if electrical power is not available to drive the parking brake motor once the vehicle has been parked, a re-application of the parking brake will not be achieved and there is a risk that the vehicle will roll away.

A further problem with known electric parking brakes relates to their speed of application. In order to produce a parking brake having a sufficiently compact size, it is usual to propose the use of a relatively small electric motor and a reduction gear arrangement that results in a relatively low speed of application for the parking brake. In US6851761 a two-speed application arrangement is proposed, in order to attempt to overcome this problem. However, such arrangements are relatively complex.

In DE10352030 an arrangement with an air chamber for applying a parking brake is proposed, where a pair of complementary wedges close around a push rod, causing the brake to remain applied as the air in the service brake is vented. In WO99/48738 a system is proposed whereby an electric motor can actuate a wedge to engage the operating shaft of the brake when the parking brake is applied, preventing the brake from being released.

The present invention seeks to overcome, or at least mitigate, the problems of the prior art.

A first aspect of the present invention is presented in claim 1.

Embodiments of the present invention will be described, by way of example only, with reference to the accompanying drawings, in which:
FIGURE 1 is an isometric cross-sectional view through a brake actuator along the axial centreline thereof and incorporating a parking brake mechanism according to a first embodiment of the present invention;
FIGURE 2 is an isometric perspective view of a sub-assembly of the mechanism of Figure 1;
FIGURES 3 to 7 are cross-sectional views through the actuator of Figure 1 along the axial centreline thereof illustrating various successive stages in the application of the parking brake when a compressed air supply to the actuator is available;
FIGURES 8, 9 and 10 illustrate various successive stages in the application of the parking brake utilising electrical actuation only;
FIGURES 11, 12 and 13 illustrate the sequence of releasing the parking brake after it has been applied with the brake components hot.
FIGURES 14, 15 and 16 illustrate the release of the parking brake after it has been applied with the brake components at a cold temperature;
FIGURE 17 is a cross-section through a brake actuator along an axial centreline thereof and incorporating a parking brake mechanism according to a second embodiment of the present invention;
FIGURE 18 is an isometric view of a sub-assembly of the parking brake mechanism of Figure 17; and
FIGURE 19 is a brake actuator attached to a brake caliper, the actuator incorporating a parking brake mechanism according to a third embodiment of the present invention.

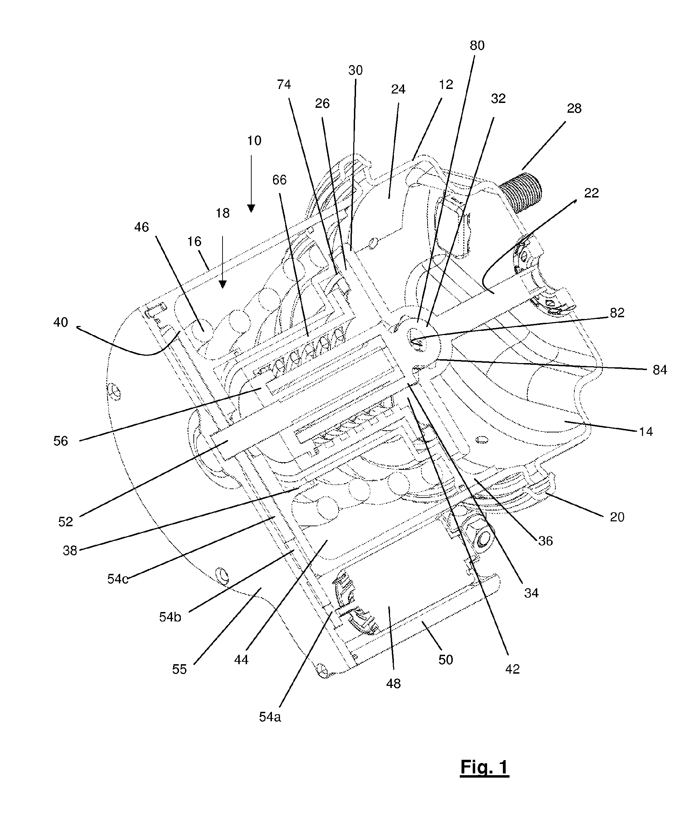

With reference to Figure 1, one half of a substantially cylindrical brake actuator 10 is shown in longitudinal cross-section about the central axis of the actuator. The actuator 10 comprises a housing, which in this embodiment includes a first shell 12 that forms the major part of a service brake chamber 14 and a second shell 16 that forms a minor part of the service brake chamber 14, and largely houses a parking brake mechanism 18.

The term "inboard" as used below denotes a direction towards a centreline of a vehicle to which the brake is fitted, whereas "outboard" refers to a direction away from the centreline.

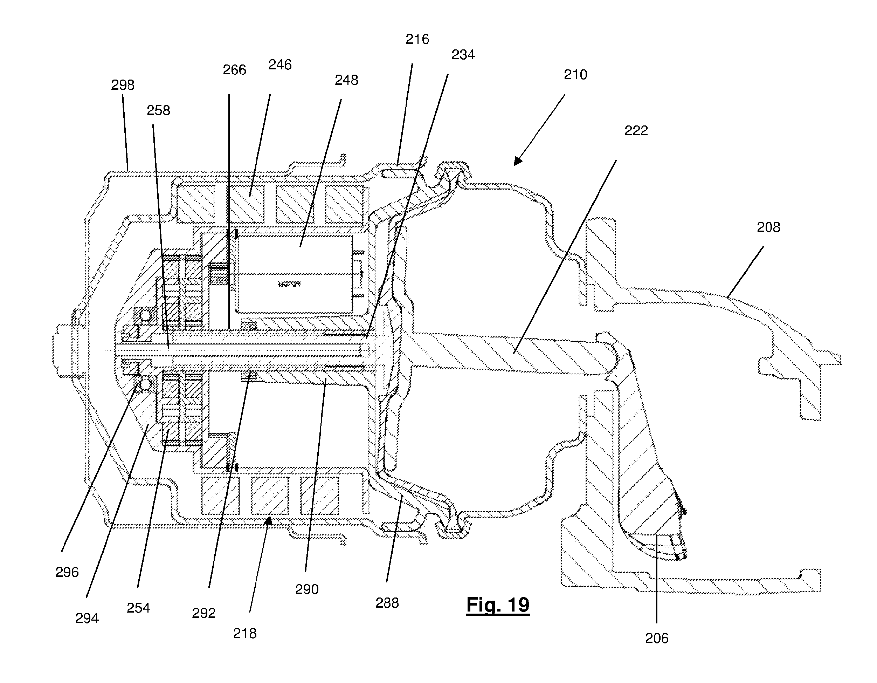

The first and second shells 12 and 16 are held together by a clamp band arrangement 20 that engages corresponding lips on the shells, as is well known. In this embodiment, the clamp arrangement 20 also acts to sandwich a flexible diaphragm (not shown) between the lips and which is also connected to a service brake push-rod 22 so as to split the service brake chamber 14 into a non-pressurised region at the outboard side of the chamber (the side incorporating the free end of the push rod) as illustrated in Figure 1 and a pressurised region 26 in the inboard portion of the chamber 14, the other side of the diaphragm, as is well known in the art. The first shell 12 further comprises two studs (one visible in Figure 1) 28 to mount the actuator 10 to an inboard face of a known brake caliper 208, e.g. of the type disclosed in the applicant's earlier patent EP1000263 (see the third embodiment of Figure 19).

The push-rod 22 terminates at its inboard end with a pressure distribution disc 30 and a central recess 32 to releasably accommodate a push-rod 34 of the parking brake mechanism 18 as discussed in more detail below.

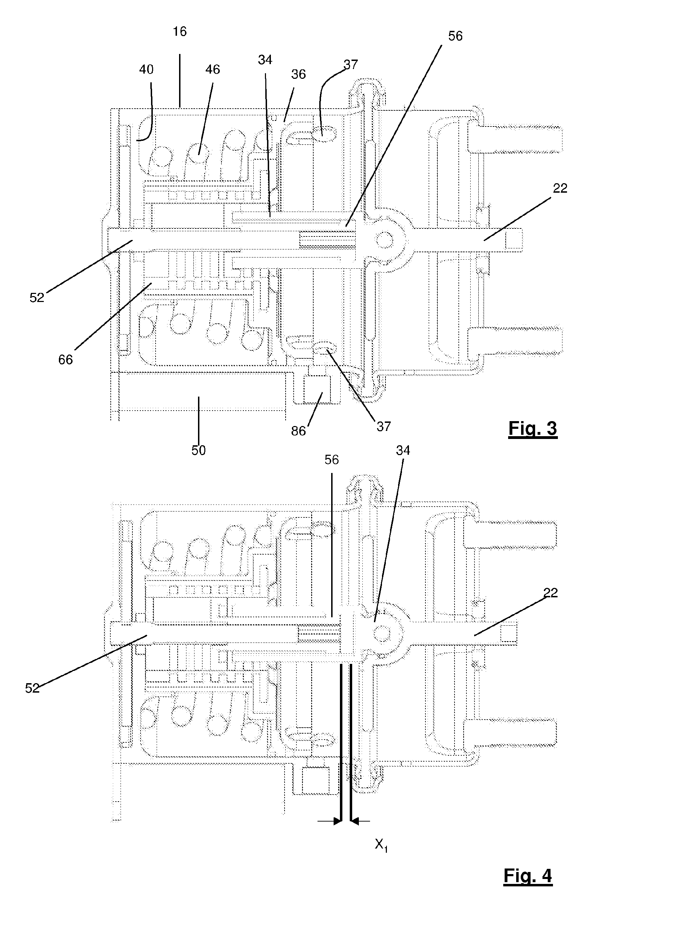

The parking brake mechanism 18 comprises a stepped piston 36 that is sealed in relation to the second shell 16 at its axially outboard end and may slide axially relative thereto. At its inboard end it is also sealed relative to a circular lip 38 that projects from an inboard end wall 40 of the second shell 16 in an outboard direction. The piston 36 therefore also separates the parking brake mechanism 18 into a pressurised region 42 that is contiguous with the pressurised region 26 of the service brake chamber, and an unpressurised toroidal region 44. The piston 36 is prevented from sliding outboard beyond a predetermined position by stops 37 (see Figure 3) provided on the second shell 16.

The unpressurised region 44 houses a resilient device in the form of a helical spring 46 that is supported at its inboard end by the wall 40 and its outboard end by the piston 36. The helical spring 46 is designed such that it is preloaded by a predetermined amount when resting against the stops 37.

An electric motor 48 is provided in a separate housing 50 to the side of the second shell 16. The motor is connected to a drive shaft that extends down the centre of the parking brake mechanism 18 via reduction gears 54a, 54b and 54c. A cover plate 55 is provided on the inboard end of the second shell 16 and electric motor housing 50 to protect the reduction gears. The outboard end of the drive shaft 52 drives an extensible device and is splined such that it is rotationally fixed to an inner bayonet member 56 of the extensible device, but enables the inner bayonet member to slide axially with respect to the drive shaft.

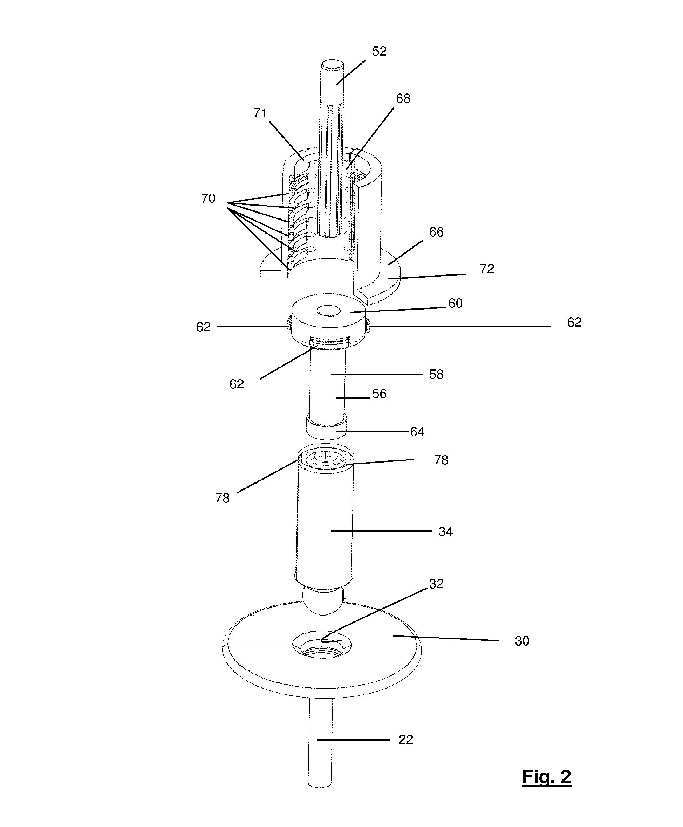

As can be seen more clearly from the exploded isometric view of Figure 2, the inner bayonet member 56 comprises a central shaft portion 58, an inboard enlarged head portion 60 including three bayonet lugs 62 equally angularly spaced around its circumference, and an outboard threaded portion 64 at the opposite end of the shaft portion 58 to the enlarged head 60.

An outer bayonet sleeve 66 is provided with three axially extending channels 68 (only one visible in the cut-away of Figure 2) that are as wide or wider than the bayonet lugs 62, such that when the lugs are aligned with the channels, the inner bayonet member 56 is able to slide axially with respect to the outer bayonet sleeve 66 without any restriction. Circumferentially intermediate each of the channels 68 are an array of axially spaced projections 70 that are arranged in three axially aligned rows. If the inner bayonet member 56 is rotated through 60 degrees from its position in which the lugs 62 are aligned with the channels 68, the lugs engage or latch instead between a pair of projections, thus preventing the inner bayonet member from moving axially with respect to the outer bayonet sleeve 66. A wall 71 at the inboard end of the outer bayonet sleeve 66 prevents the inner bayonet member from sliding inboard beyond the outer bayonet sleeve.

Referring back to Figure 1, it should be noted that the outer bayonet sleeve 66 is sized to locate within the stepped piston 36 and has a peripheral inboard lip 72 that is in contact with a circular leaf spring 74 mounted to an outboard face of the stepped piston 36. A needle roller thrust bearing (not shown) is located between the outboard face of the stepped piston 36 and the lip 72 so the two components move axially together with only restricted relative axial movement between the stepped piston and the outer bayonet sleeve 66 (e.g. due to vibration).

The threaded portion 64 of the inner bayonet member 56 locates within an internally threaded bore 76 of the parking brake push rod 34. Consequently, rotation of the drive shaft 52 and the inner bayonet member 56 results in the extension and retraction of the parking brake push rod 34 with respect to the remainder of the parking brake mechanism 18. A pair of axially extending slots 78 are provided at opposed locations on the outer face of the parking brake push rod 34 and are arranged to be engaged by a corresponding pair of prongs (not shown) on the circular leaf spring 74 such that the parking brake push rod 34 may move axially, but not rotate with respect to the remainder of the actuator 10.

The parking brake push rod 34 terminates at its outboard end in a spherical ball-shaped head 80 that is dimensioned to fit within the recess 32 of the pressure distribution disc 30 of the service brake push rod 22. A spring loaded ball-bearing 82 is mounted within the head 80 and sits within a circumferentially extending depression 84 within the recess 32. As a result, a pre-determined force is required to cause the ball-bearing 82 to retract and for the parking brake push rod 34 to separate from the service brake push rod 22.

With reference to Figure 3, a cross-section along a slightly different axial plane to Figure 1 is shown and it can be seen that an air inlet portion 86 is provided in the second shell 16 through which pressurised air may be introduced into the pressurised region of the service brake in order to apply the service brake.

Figure 3 illustrates the brake actuator 10 in a condition in which air has been introduced into the pressured region 26 up to a pre-determined pressure. It can be seen that this pressure has caused the service brake push rod 22 to move outboard, and to also pull the parking brake push rod 34 with it, because the inner bayonet member 56 is not engaged with the projections on the outer bayonet sleeve 66. In addition, the stepped piston 36 has moved inboard by comparison with Figure 1, such that it is in contact with the inboard end wall 40 of the second shell 16.

In normal service brake operations, the compressed air is allowed to vent and a return spring (not shown) causes the service brake push rod 22 to return to the rest position of Figure 1 and the brake to cease being applied.

However, when a vehicle user wishes to apply the parking brake, in normal operation, the first step of this process is to apply the service brake as shown in Figure 3. It is then necessary to drive the electric motor 48 via the reduction gears 54a, b and c for the next stage of parking brake application, as shown in Figure 4. Driving the motor 48 causes the inner bayonet member 56 and outer bayonet member 66 to rotate relative to the parking brake push rod 34 until the bayonet lugs 62 are in alignment with a gap between the projections 70 of the outer bayonet sleeve (note spacing X₁ between the inner bayonet member 56 and the end of the threaded bore of the parking brake push rod 34). Once alignment occurs, friction from the leaf spring 34 stops the outer bayonet 66 rotating and the inner bayonet member 56 is able to rotate with respect to the outer bayonet sleeve 66 so it is latched between projections 70 and axial movement of the inner bayonet member with respect to the outer bayonet sleeve is now prevented. The electrical current through the motor 48 can be monitored to determine when this occurs, as the load on the motor reduces once alignment occurs.

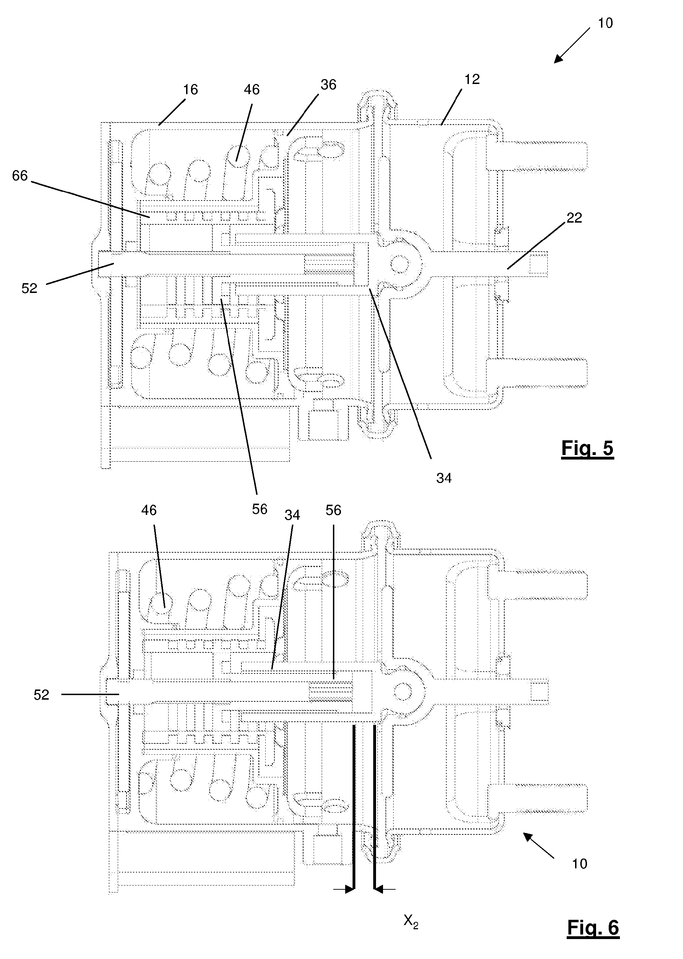

With reference to Figure 5, the compressed air within pressurised region 26 is released. This enables the helical spring 46 to relax slightly so that the stepped piston 36 slides slightly outboard with respect to the second shell 16. Then, in order to fully compress the helical spring 46, the motor 48 is again driven forward (note increase in spacing X₂ compared to X₁). Advantageously, by monitoring the current through the motor 48 and correlating this to the load on the motor, it is possible to apply a pre-determined parking brake clamp load.

It will thus be appreciated with reference to Figure 6, that the clamp load acts from the compressed helical spring 46, via the stepped piston 36, which is in engagement with the outer bayonet sleeve 66, inner bayonet member 56, parking brake push rod 34 and then to the service brake push rod 22 which is acting on the operating shaft 206 in the brake caliper 208 of the brake to cause the brake pads to clamp the brake disc.

As is often the case, the parking brake is applied when the brake disc and other brake components are hot due to energy dissipated as heat by previous service brake applications as the heavy vehicle is operated. As the disc and other brake components cool back to ambient temperature whilst the heavy vehicle is parked, it is inevitable that the disc and pads contract. In order to prevent the heavy vehicle from rolling away if parked on a slope, it is necessary to maintain a certain level of clamp load despite this contraction.

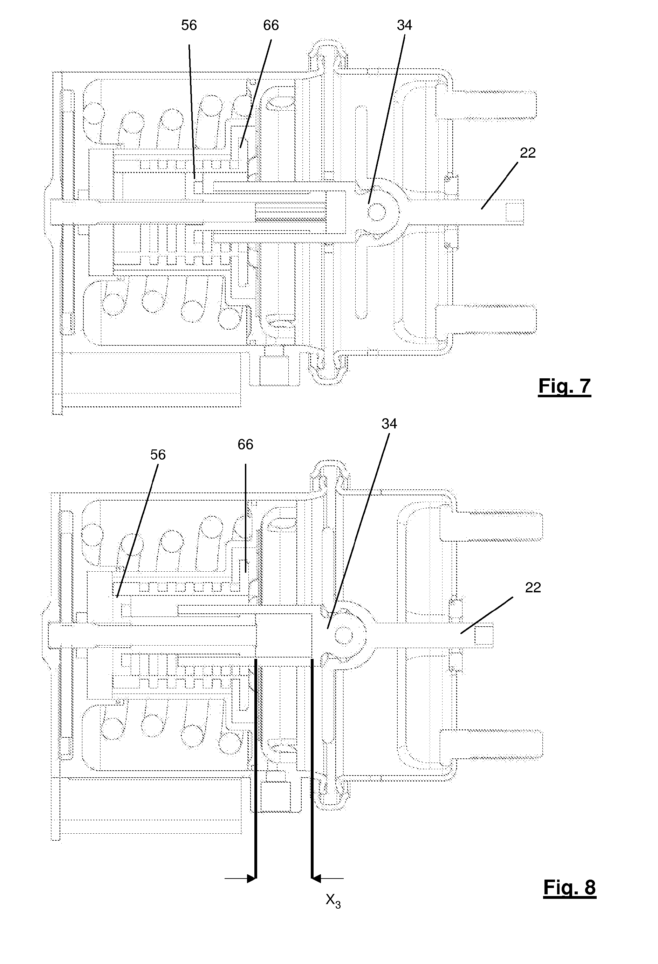

Referring to Figure 7, it can be seen that in such a situation the helical spring 46 relaxes, thus causing the parking brake mechanism 18 to shift outboard by a significant amount. However, the preload on the spring means that despite this relaxation, it is able to continue to apply a high force through the parking brake mechanism such that a necessary clamp load is applied by the parking brake even after the disc and other brake components have cooled to ambient temperatures.

Figures 8, 9 and 10 illustrate an application of the parking brake using the motor 48 alone. This may be necessary if there is a failure in the air supply of the vehicle. In Figure 8, the motor 48 has driven the parking brake push rod outboard with respect to the inner bayonet member 56 to the point at which it has equalled the pre-load on the spring (note increased spacing X₃). The inner bayonet member 56 is restrained in its most extreme inboard position with respect to the outer bayonet sleeve 66 so that the parking brake push rod 34 and the inner bayonet member 56 are in compression and the outer bayonet sleeve is in tension, abutting against the stepped piston 36.

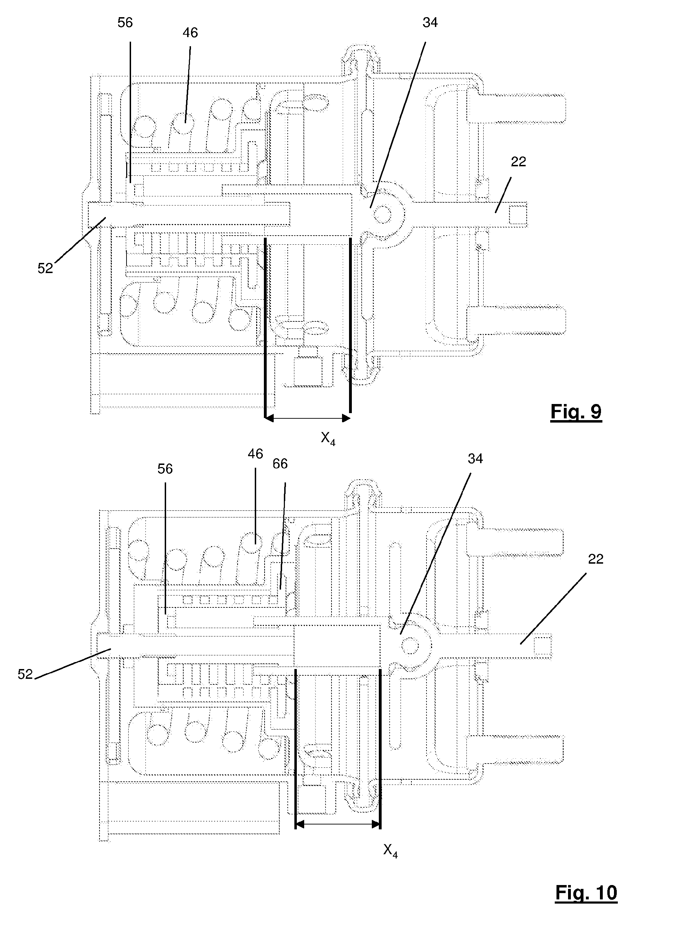

In Figure 9, the motor is continued to be driven forward to fully compress the spring (it can be seen that the inboard end of the stepped piston 36 abuts the outboard face of the inboard end wall 40 to prevent further compression of the spring and the spacing X₄ then further increases with respect to X₃). At this point, in this embodiment, the spring is loaded. The motor current can again be monitored to determine when this loading has been achieved.

With reference to Figure 10, it can be seen that the brake has again cooled but that the helical spring 46 has relaxed and shifted the parking brake mechanism 18 outboard so that a sufficient clamp load continues to be transmitted via the service brake push rod 22 to the brake.

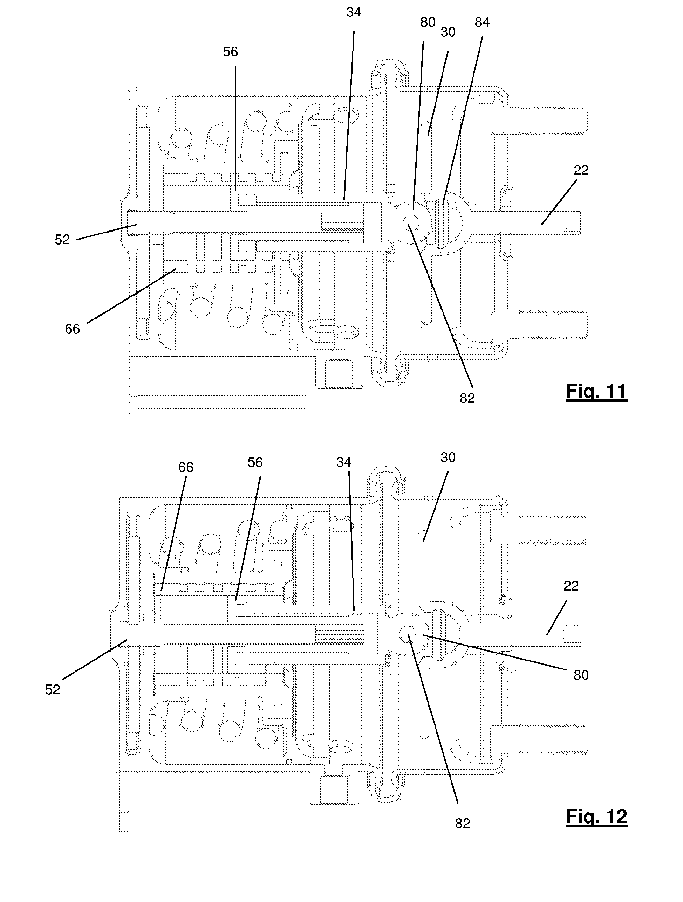

Figures 11, 12 and 13 illustrate a parking brake release operation after a standard parking brake application when the brake was hot. The first stage of release is the introduction of compressed air into the pressurised region 26. This, in effect, unloads the parking brake mechanism 18 inboard and causes the spring loading of the ball-bearing 82 to be overcome such that the parking brake push rod 34 separates from the service brake push rod 22.

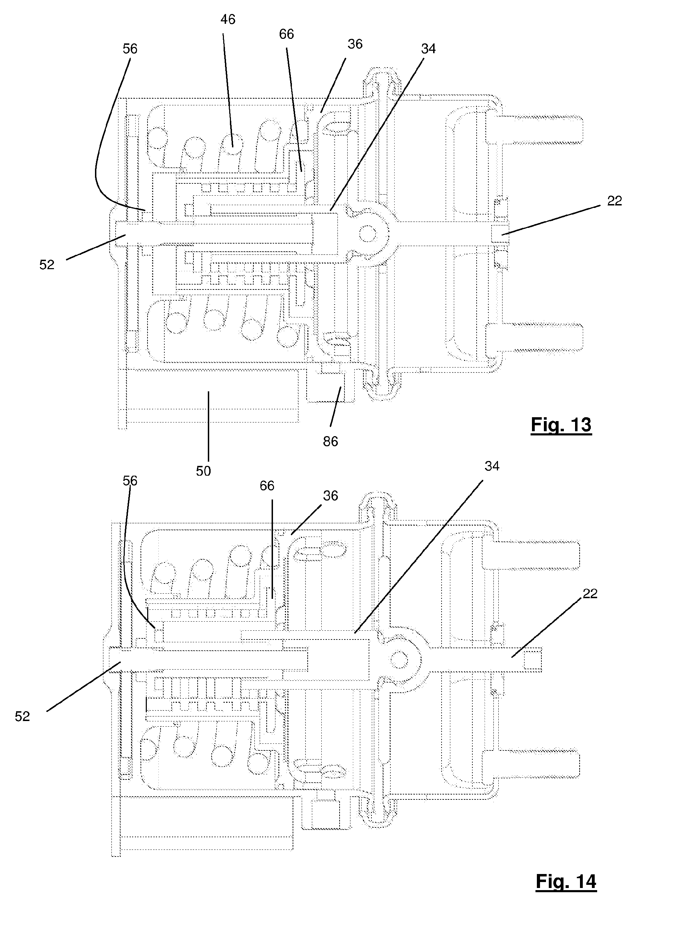

In Figure 12, it can be seen that, with the load removed, the motor has been driven in reverse to unlock the bayonet lugs 62 from the projections 70. The inner bayonet member 56 may now retract inboard with respect to the outer bayonet sleeve 66. In Figure 13 the air pressure has been released, causing the parking brake push rod 34 to re-engage with the service brake push rod 22, the inboard retraction of the inner bayonet member 56 to occur, and the stepped piston 36 to return back to its rest position under the influence of helical spring 46. Finally, the motor has driven backwards to retract the parking brake push rod back to its rest position with respect to the inner bayonet member 56.

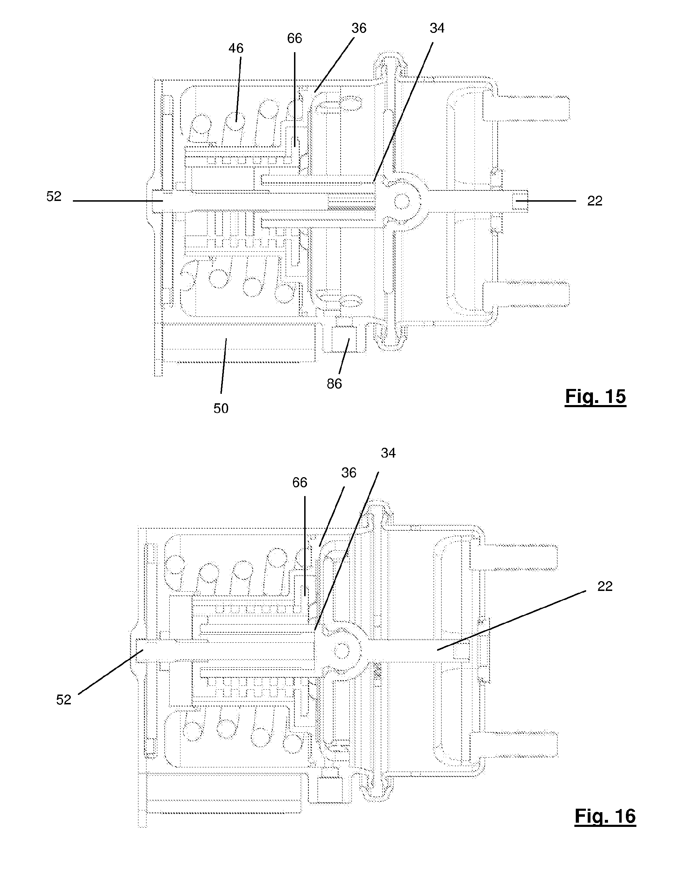

Figures 14, 15 and 16 illustrate a similar release process to Figures 11, 12 and 13 except that the parking brake was originally applied with the brake components cold (i.e. at ambient temperature) and parking was achieved without compressed air. Thus, no contraction of the components has occurred whilst the vehicle is parked and compressed air is introduced into the pressurised region 26, no separation of the parking and service brake push rods occurs. Because the release follows a motor applied parking operation, a greater amount of reverse drive is needed from the motor to return the parking brake push rod to its inboard rest position with respect to the inner bayonet member.

Therefore it will be appreciated that the use of the helical spring 46 means that contraction of the brake disc and other brake components may be compensated for whilst the vehicle is standing with the parking brake applied. As a result, on the one hand the risk of the vehicle rolling away due to a reduced clamp load is minimised, whilst at the same time excess loadings do not need to be applied to the brake to account for such contractions and therefore fatigue on components may be reduced. Additionally, the use of the bayonet components enables a rapid application and release of the parking brake in normal circumstances when compressed air is available whilst enabling a relatively small, low power parking brake motor to be used, and still having a back-up of solely electrical parking in the event of failure of the air supply. Finally, by locating the motor external the main body of the cylinder, it may be orientated at any desired angle with respect to the brake caliper to ensure that its packaging can be optimised for a wide variety of vehicle configurations.

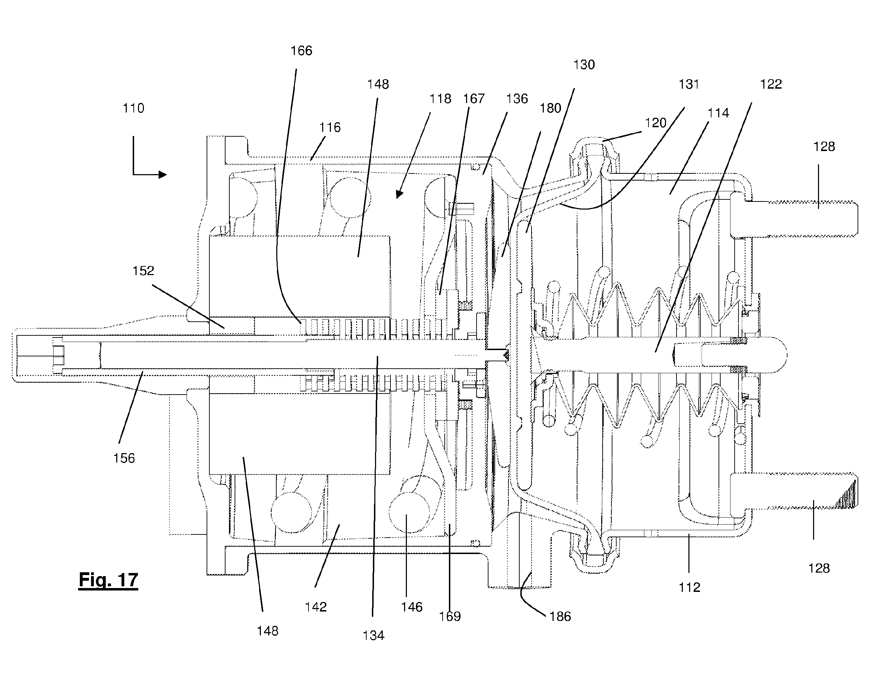

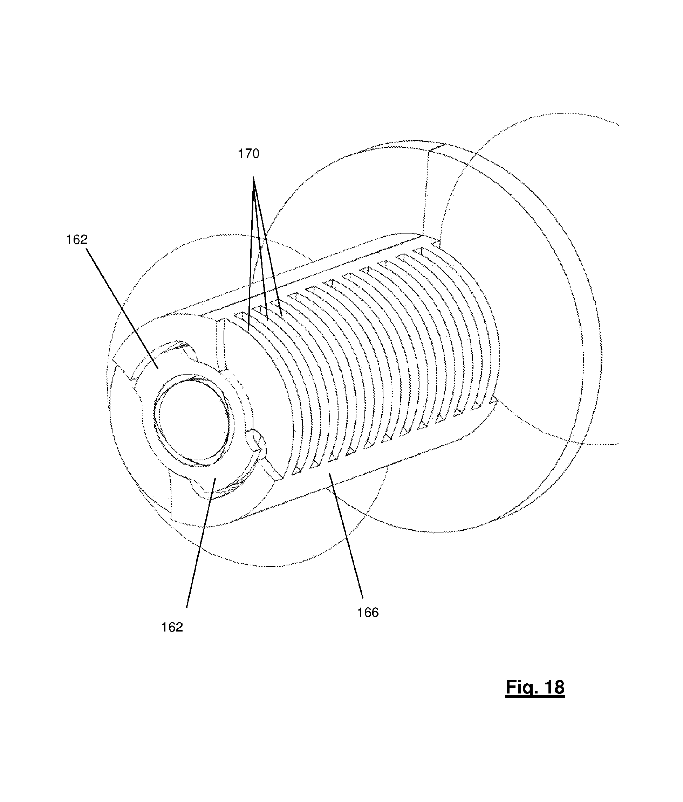

Figures 17 and 18 illustrate a second embodiment of the present invention in which like parts have been denoted by like numerals but with the addition of the prefix "1". Only differences with respect to the actuator of the first embodiment are discussed in detail below.

The actuator 110 of Figure 17 functions using similar principles to the actuator shown in Figure 1 and the various operation sequences shown in Figures 3 to 16 are similar. However, the parking brake mechanism 118 of the second embodiment is located entirely within the unpressurised region of the parking brake 142 and the electric motor 148 is mounted concentrically between the helical spring 146 and outer bayonet sleeve 166. The motor 148 drives an internally splined drive sleeve 152 via reduction gearing instead of the drive shaft 52 of the first embodiment. The inner bayonet member 156 has external splines along the major portion of its length such that it may axially slide with respect to the drive sleeve 152. The inner face of the inner bayonet member 156 is threaded and receives a complementary threaded inboard portion of the parking brake push rod. The outboard end of the inner bayonet member 156 however comprises a plurality of bayonet lugs 162, which, with reference to Figure 18, are able to be positioned with respect to the outer bayonet sleeve 166 as shown in Figure 18 to permit axial movement of the inner bayonet member with respect to the outer, or be rotated through approximately 90 degrees by the motor 148 so as to engage between the projections 170 and axially latch the inner bayonet member to the outer bayonet sleeve 166.

The ball-shaped head 80 at the outboard end of the parking brake push rod 34 of the first embodiment is replaced by a load spreading plate 180 that is magnetised such that it is normally held in contact with the pressure distribution disc 130 of the service brake push rod. In this embodiment, a flexible diaphragm 131 is shown extending between the pressure distribution disc 130 and the clamp band arrangement 120.

The parking brake push rod 134 extends through the piston 136 and a sealing arrangement is provided between the piston 136 and the push rod 134. Furthermore, the outboard end of the push rod 134 is provided with a non-circular profile to prevent rotation of the push rod with respect to piston 136. In this embodiment, the profile is a tri-lobed profile. In other embodiments, alternative profiles such as ovals, etc. may be used.

A thrust bearing arrangement 167 is provided between the outer bayonet sleeve 166 and a spring seat 169 that connects the spring 146 to the piston 136, such that the outer bayonet sleeve 166 is able to rotate freely with respect to the piston 136 but, nevertheless, transmit axial loads to the spring.

In operation, the parking brake mechanism 118 functions in a similar manner to that of the first embodiment. Compressed air is introduced via air inlet port 186 to shift the service brake push rod 122 outboard to apply the brake and simultaneously the parking brake push rod 134 is shifted outboard under the influence of the magnetic connection between the pressure distribution disc 130 and load spreading head 180. The motor 148 is then driven so as to engage the bayonet lugs 162 between appropriate projections 170 of the outer bayonet sleeve 166 so as to latch the two components together. Further driving of the motor causes the additional loading of the spring, since the inner bayonet member 156 rotates relative to the parking brake push rod 134 and the two components are threaded together.

Once the required parking brake load has been achieved, the air can be released via port 186 and the parking brake load from the spring 146 is transmitted via the piston 136, outer bayonet sleeve 166, inner bayonet sleeve 156, parking brake push rod 134 and the load spreading head 180 to the service brake push rod 122 to thereby maintain the parking brake clamp load and also account for any contraction of the brake disc by enabling this to be accommodated by relaxation of the spring 146 as required.

Furthermore, in the event of failure of the air supply, the parking brake can be applied by the electric motor 148 alone, via the rotation of the inner bayonet member 156 relative to the parking brake push rod 134, albeit more slowly than if air is available.

Figure 19 illustrates a further embodiment of the parking brake mechanism 218 in which like parts are denoted by like numerals, but with the addition of the prefix "2".

This embodiment provides a simplified arrangement that dispenses with the bayonet-type mechanism.

The actuator 210 is shown connected to a caliper housing 208 having an operating shaft 206 located therein, which is pivoted by movement of the push rod 222.

In addition, in this embodiment, the electric motor 248 is mounted within the helical spring 246, but is off-set from the parking brake push rod 234, rather than being arranged concentrically around it. The electric motor 248 drives the parking brake push rod via an epicyclic reduction gear arrangement 254 that outputs its drive to an internally threaded sleeve portion 266 of a lead screw assembly, which additionally comprises a push rod 234 having a complementary external thread and a splined central shaft 258 that is rotationally fixed such that drive from the outer sleeve causes the push rod to extend or retract.

A fixed wall 288 is provided between the service brake chamber and the parking brake mechanism 218 and a guide bore 290 extends inboard from the wall 288 to support the parking brake push rod 234. A seal 292 is provided in the bore 290 such that the entire parking brake mechanism is in an unpressurised portion of the brake actuator 210.

The motor 248, reduction gears 254 and splined shaft 258 are all mounted with respect to a moving casing 294, with a thrust bearing 296 supporting the reduction gears 254. The helical spring 246 is mounted between the second shell 216 and the moving casing 294 such that the extension of the parking brake push rod 234 may not only cause the brake to be applied by shifting the service brake push rod 222 outboard, but may also cause the moving casing to move inboard with respect to the second shell 216, and the helical spring 246 to thereby be compressed. Thus, when the parking brake is applied whilst the brake is in a hot condition, the spring may relax and enable a suitably high brake force to be applied to the op-shaft despite the contraction of the hot brake components.

As in the previous embodiment, a pre-determined amount of pre-load is applied to the helical spring 246 when in the rest position shown in Figure 19, in which the moving casing 294 abuts the fixed wall 288 such that a high load can be applied to the op-shaft even as the casing approaches the fixed wall 288. Thus, this embodiment benefits from the same advantages as regards ensuring a sufficiently high clamp load even during cooling and contraction of brake components as the parking brake mechanisms of the first two embodiments. However, since the brake does not include an equivalent of the bayonet latching mechanism, it may take longer for the parking brake push rod to extend and retract by comparison with the parking brake mechanisms of the first two embodiments.

The shell 298 illustrates the usual position of a conventional spring parking brake shell so the overall reduction in size of the parking brake of the present invention can be seen by comparison.

It should be appreciated that terms such as inner and outer, inboard and outboard, upper and lower should not be regarded as limiting and that the position of components may be adjusted as required. In particular, the actuator may be angled with respect to the caliper housing such that it is not strictly positioned in the inboard-outboard direction of a vehicle to which it is fitted.

It should be appreciated that numerous changes may be made within the scope of the present invention. For example, the reduction gear arrangement may be replaced by suitable alternative types of reduction gearing, the helical spring may be replaced by other resilient components such as a stack of Belville washers, the bayonet arrangement may be replaced by alternative latching mechanisms such as clamping devices or collet arrangements similar to those of our earlier patent application, EP1596090. A magnetic parking brake push rod to service brake push rod connection may be used in the first embodiment and the spring loaded connection of the first embodiment used in the second embodiment. The parking brake mechanism may be adapted for use with a electrically actuated service brake. The parking brake may also be used in conjunction with drum brakes as well as disc brakes. In alternative embodiments the entire parking brake mechanism may be within the pressurised area, or the mechanism of the first embodiment may be entirely within the unpressurised area. The bayonet arrangement may have lugs and projections with a curved or helical form to assist with engagement thereof during latching.

## Claims

1. A parking brake mechanism (18, 118, 218) for an air-actuated disc brake, the mechanism comprising:
an electrically powered actuator (10, 110, 210);
an extensible device drivably connected to the actuator (10, 110, 210) and able to extend and retract and be held in place in an extended position to thereby apply a brake;
a resilient device (46, 146, 246) arranged to act on the extensible device and maintain a desired level of force to be applied by the parking brake mechanism in the event of contraction of brake components due to cooling, wherein the extensible device comprises a latching arrangement, and **characterised in that** the extensible device further comprises a lead screw arrangement drivable by the actuator (10, 110, 210).

2. A parking brake (18, 118, 218) according to claim 1 wherein the latched state of the latching arrangement is selectable by driving the actuator (10, 110, 210).

3. A parking brake mechanism (18, 118, 218) according to claim 1 or claim 2 wherein the latching arrangement comprises multiple axial latching positions.

4. A parking brake mechanism (18, 118, 218) according to any preceding claim wherein the latching arrangement is of a bayonet-type in which relative rotation of a first component with respect to a second component effects latching.

5. A parking brake mechanism (18, 118, 218) according to any preceding claim wherein a single actuator (10, 110, 210) may drive the lead screw arrangement and select the latched state.

6. A parking brake mechanism (18, 118, 218) according to any preceding claim wherein the resilient device is a helical spring (46, 146, 246).

7. A parking brake mechanism (18, 118, 218) according to claim 6 wherein the extensible device is located concentrically within the helical spring (46, 146, 246).

8. A parking brake mechanism (18, 118, 218) according to claim 6 or claim 7 wherein the actuator (10, 110, 210) is located within the helical spring (46, 146, 246), preferably wherein the actuator (10, 110, 210) is located concentrically with respect to the spring (46, 146,246).

9. A parking brake mechanism (18, 118, 218) according to claim 8 wherein the actuator (10, 110, 210) is located externally of the helical spring (46, 146, 246).

10. A parking brake mechanism (18, 118, 218) according to any preceding claim configured to act on a lever portion of a brake operating shaft (206).

11. A parking brake mechanism (18, 118, 218) according to any preceding claim wherein the mechanism further comprises a service brake actuator, preferably wherein the extensible device is configured to act substantially coaxially with the service brake actuator.

12. A parking brake mechanism (18, 118, 218) according to claim 11 wherein the service brake actuator is an air-actuator comprising a piston or diaphragm located within an air chamber such that the introduction of pressurised air displaces the piston or diaphragm to apply the brake, preferably wherein the parking brake mechanism is in fluid flow communication with air chamber such that pressurised air additionally applies a load to compress the resilient device.

13. A parking brake mechanism (18, 118, 218) according to claim 12 wherein the extensible device is connected to the piston or diaphragm such that displacement of the piston or diaphragm may cause displacement of the extensible device, preferably wherein the extensible device is releasably connected to the piston or diaphragm such that under certain conditions it may be released therefrom.

14. A combination service and parking brake actuator incorporating a mechanism (18, 118, 218) according to any preceding claim.

15. A brake incorporating a mechanism (18, 118, 218) according to any preceding claim.

## Patentansprüche

1. Feststellbremsenmechanismus (18, 118, 218) für eine luftbetätigte Scheibenbremse, wobei der Mechanismus Folgendes umfasst:
einen mit elektrischer Leistung versorgten Stellantrieb (10, 110, 210),
eine streckbare Vorrichtung, die antreibbar mit dem Stellantrieb (10, 110, 210) verbunden und fähig ist, sich zu strecken und zusammenzuziehen und in einer gestreckten Position an Ort und Stelle gehalten zu werden, um dadurch eine Bremse anzulegen,
eine federnde Vorrichtung (46, 146, 246), die eingerichtet ist, um auf die streckbare Vorrichtung einzuwirken und ein gewünschtes Kraftniveau aufrechtzuerhalten, das von dem Feststellbremsenmechanismus beim Zusammenziehen der Bremsenbauteile aufgrund von Abkühlen angelegt wird, wobei die streckbare Vorrichtung eine Einrastanordnung umfasst und **dadurch gekennzeichnet ist, dass** die streckbare Vorrichtung ferner eine Leitspindelanordnung umfasst, die von dem Stellantrieb (10, 110, 210) angetrieben werden kann.

2. Feststellbremse (18, 118, 218) nach Anspruch 1, wobei der Einrastzustand der Einrastanordnung durch Treiben des Stellantriebs (10, 110, 210) auswählbar ist.

3. Feststellbremsenmechanismus (18, 118, 218) nach Anspruch 1 oder 2, wobei die Einrastanordnung mehrere axiale Einrastpositionen umfasst.

4. Feststellbremsenmechanismus (18, 118, 218) nach einem der vorhergehenden Ansprüche, wobei die Einrastanordnung des Bajonetttyps ist, bei dem relative Drehung eines ersten Bauteils in Bezug auf ein zweites Bauteil das Einrasten bewirkt.

5. Feststellbremsenmechanismus (18, 118, 218) nach einem der vorhergehenden Ansprüche, wobei ein einzelner Stellantrieb (10, 110, 210) die Leitspindelanordnung treiben und den eingerasteten Zustand auswählen kann.

6. Feststellbremsenmechanismus (18, 118, 218) nach einem der vorhergehenden Ansprüche, wobei die federnde Vorrichtung eine Schraubenfeder (46, 146, 246) ist.

7. Feststellbremsenmechanismus (18, 118, 218) nach Anspruch 6, wobei die streckbare Vorrichtung konzentrisch innerhalb der Schraubenfeder (46, 146, 246) liegt.

8. Feststellbremsenmechanismus (18, 118, 218) nach Anspruch 6 oder 7, wobei der Stellantrieb (10, 110, 210) innerhalb der Schraubenfeder (46, 146, 246) liegt, wobei vorzugsweise der Stellantrieb (10, 110, 210) konzentrisch in Bezug auf die Feder (46, 146, 246) liegt.

9. Feststellbremsenmechanismus (18, 118, 218) nach Anspruch 8, wobei der Stellantrieb (10, 110, 210) außerhalb der Schraubenfeder (46, 146, 246) liegt.

10. Feststellbremsenmechanismus (18, 118, 218) nach einem der vorhergehenden Ansprüche, der ausgelegt ist, um auf einen Hebelabschnitt eines Bremsbetätigungsschafts (206) einzuwirken.

11. Feststellbremsenmechanismus (18, 118, 218) nach einem der vorhergehenden Ansprüche, wobei der Mechanismus ferner einen Betriebsbremsenstellantrieb umfasst, wobei die streckbare Vorrichtung vorzugsweise ausgelegt ist, um im Wesentlichen koaxial zu dem Betriebsbremsenstellantrieb zu wirken.

12. Feststellbremsenmechanismus (18, 118, 218) nach Anspruch 11, wobei der Betriebsbremsenstellantrieb ein Luftstellantrieb ist, der einen Kolben oder eine Membran, der/die sich in einer Luftkammer befindet, derart umfasst, dass das Einführen druckbeaufschlagter Luft den Kolben oder die Membran zum Anlegen der Bremse verlagert, wobei der Feststellbremsenmechanismus vorzugsweise in Fluidstromverbindung mit der Luftkammer ist, so dass die druckbeaufschlagte Luft zusätzlich eine Last anlegt, um die federnde Vorrichtung zu komprimieren.

13. Feststellbremsenmechanismus (18, 118, 218) nach Anspruch 12, wobei die streckbare Vorrichtung mit dem Kolben oder der Membran derart verbunden ist, dass die Verlagerung des Kolbens oder der Membran eine Verlagerung der streckbaren Vorrichtung verursachen kann, wobei die streckbare Vorrichtung vorzugsweise mit dem Kolben oder der Membran derart verbunden ist, dass sie unter bestimmten Bedingungen davon freigegeben werden kann.

14. Kombinierter Betriebs- und Feststellbremsenstellantrieb, der einen Mechanismus (18, 118, 218) nach einem der vorhergehenden Ansprüche enthält.

15. Bremse, die einen Mechanismus (18, 118, 218) nach einem der vorhergehenden Ansprüche enthält.

## Revendications

1. Mécanisme de frein de stationnement (18, 118, 218) pour un frein à disque pneumatique, ce mécanisme comprenant :
un actionneur à alimentation électrique (10, 110, 210);
un dispositif extensible relié à entraînement à l'actionneur (10, 110, 210) et capable de s'étendre et de se rétracter, et d'être maintenu en place dans une position étendue afin d'appliquer ainsi un frein ;
un dispositif élastique (46, 146, 246) arrangé de manière à agir sur le dispositif extensible et à maintenir un niveau de force souhaité à appliquer par le mécanisme de frein de stationnement en cas de contraction des éléments de frein en raison du refroidissement, le dispositif extensible comprenant un dispositif de verrouillage, et **caractérisé en ce que** le dispositif extensible comprend par ailleurs un dispositif à vis-mère pouvant être entraîné par l'actionneur (10, 110, 210).

2. Mécanisme de frein de stationnement (18, 118, 218) selon la revendication 1, dans lequel l'état verrouillé du dispositif de verrouillage peut être sélectionné en entraînant l'actionneur (10, 110, 210).

3. Mécanisme de frein de stationnement (18, 118, 218) selon la revendication 1 ou la revendication 2, dans lequel le dispositif de verrouillage comprend des positions de verrouillage axial multiples.

4. Mécanisme de frein de stationnement (18, 118, 218) selon l'une quelconque des revendications précédentes, dans lequel le dispositif de verrouillage est de type à baïonnette, dans lequel la rotation relative d'un premier élément par rapport à un second élément effectue le verrouillage.

5. Mécanisme de frein de stationnement (18, 118, 218) selon l'une quelconque des revendications précédentes, dans lequel un actionneur unique (10, 110, 210) peut entraîner le dispositif à vis-mère et sélectionner l'état verrouillé.

6. Mécanisme de frein de stationnement (18, 118, 218) selon l'une quelconque des revendications précédentes, dans lequel le dispositif élastique est un ressort hélicoïdal (46, 146, 246).

7. Mécanisme de frein de stationnement (18, 118, 218) selon la revendication 6, dans lequel le dispositif extensible est placé de manière concentrique à l'intérieur du ressort hélicoïdal (46, 146, 246).

8. Mécanisme de frein de stationnement (18, 118, 218) selon la revendication 6 ou la revendication 7, dans lequel l'actionneur (10, 110, 210) est placé à l'intérieur du ressort hélicoïdal (46, 146, 246), de préférence dans lequel l'actionneur (10, 110, 210) est placé de manière concentrique par rapport au ressort (46, 146, 246).

9. Mécanisme de frein de stationnement (18, 118, 218) selon la revendication 8, dans lequel l'actionneur (10, 110, 210) est placé à l'extérieur du ressort hélicoïdal (46, 146, 246).

10. Mécanisme de frein de stationnement (18, 118, 218) selon l'une quelconque des revendications précédentes, configuré de manière agir sur une portion de levier d'un arbre de commande de frein (206).

11. Mécanisme de frein de stationnement (18, 118, 218) selon l'une quelconque des revendications précédentes, dans lequel le mécanisme comprend par ailleurs un actionneur de frein de service, de préférence dans lequel le dispositif extensible est configuré pour agir de manière essentiellement coaxiale avec l'actionneur de frein de service.

12. Mécanisme de frein de stationnement (18, 118, 218) selon la revendication 11n dans lequel l'actionneur de frein de service est un actionneur pneumatique comprenant un piston ou un diaphragme placé à l'intérieur d'une chambre à air, de telle façon que l'introduction de l'air comprimé déplace le piston ou le diaphragme pour appliquer le frein, de préférence dans lequel le mécanisme de frein de stationnement est en communication fluidique avec la chambre à air, de telle sorte que l'air comprimé exerce en outre une pression pour comprimer le mécanisme élastique.

13. Mécanisme de frein de stationnement (18, 118, 218) selon la revendication 12, dans lequel le dispositif extensible est raccordé au piston ou au diaphragme de manière à ce que le déplacement du piston ou du diaphragme puisse provoquer le déplacement du dispositif extensible, de préférence dans lequel le dispositif extensible est raccordé de manière libérable au piston ou au diaphragme, si bien que dans certaines conditions il puisse être détaché de celui-ci.

14. Actionneur de frein de service et de stationnement combiné intégrant un mécanisme (18, 118, 218) selon l'une quelconque des revendications précédentes.

15. Frein intégrant un mécanisme (18, 118, 218) selon l'une quelconque des revendications précédentes.
